# EUROPÄISCHE PATENTSCHRIFT

(11) **EP 2 597 415 B1**
(45) Veröffentlichungstag und Bekanntmachung des Hinweises auf die Patenterteilung: **27.02.2019**
(21) Anmeldenummer: 12007815.9
(22) Anmeldetag: 20.11.2012
(51) Int. Cl.: F41G 7/22, G01S 3/786, F42B 12/40, C09D 5/04, F41H 13/00, G01S 17/66, G01S 17/74, F41G 1/32, F41G 3/02, F41G 3/14

(54) **Verfahren und Vorrichtung zur Verfolgung eines bewegten Zielobjekts**
Method and device for tracking a moving target object
Procédé et dispositif de suivi d'un objet cible en mouvement

(30) Priorität: 28.11.2011 DE 102011119480
(43) Veröffentlichungstag der Anmeldung: 29.05.2013
(73) Patentinhaber: Airbus Defence and Space GmbH, 82024 Taufkirchen (DE)
(72) Erfinder: Hiebl, Manfred, D-86633 Neuburg a.d. Donau (DE)
(74) Vertreter: Isarpatent

(56) Entgegenhaltungen:
- EP-A2- 1 376 160
- JP-A- 2009 020 045
- US-A- 3 563 771
- US-A- 4 916 014
- US-A1- 2003 201 394
- US-A1- 2011 017 097
- US-B1- 6 532 947

## Beschreibung

### TECHNISCHES GEBIET

Die vorliegende Erfindung betrifft ein Verfahren und eine Vorrichtung zur Verfolgung eines bewegten Zielobjekts, insbesondere eines Fahrzeugs.

### HINTERGRUND DER ERFINDUNG

Insbesondere bei sogenannten asymmetrischen Bedrohungslagen, bei denen sich feindliche Personen als Zivilisten tarnen und aus dieser zivilen Tarnung heraus operieren, ist es schwierig, einzelne feindliche Personen aus der Distanz und unerkannt zu bekämpfen, ohne dabei größere Kollateralschäden zu verursachen.

Insbesondere die Benutzung ziviler Kraftfahrzeuge durch die feindlichen Personen erschwert die Identifikation und damit auch die Bekämpfung der feindlichen Person. Werden diese feindlichen Personen gezielt aus der näheren Umgebung, beispielsweise mittels Schusswaffen von eigenen Einsatzkräften bekämpft, so werden diese eigenen Einsatzkräfte durch den Schusswaffengebrauch und die sich daraus ergebenden Folgen enttarnt. Insbesondere bei Operationen in feindlichem Gebiet ist eine derartige direkte Bekämpfung der feindlichen Personen daher ausgeschlossen.

Hier wäre es von Vorteil, wenn die feindlichen Personen mittels sogenannter Drohnen, also unbemannter Flugkörper, bekämpft werden könnten. Dazu ist es erforderlich, dass die Drohne das Fahrzeug, mit welchem die feindliche Person unterwegs ist, eindeutig identifiziert. Diese Identifizierung ist jedoch von der Drohne häufig nicht eindeutig zu bewerkstelligen, da möglicherweise auch andere Fahrzeuge desselben Typs mit derselben Außenfarbe in dem Gebiet unterwegs sind, in welchem sich die Zielperson aufhält.

Es ist grundsätzlich denkbar, eine automatische Identifikation durch Bilderfassungsgeräte der Drohne aufgrund des Fahrzeugkennzeichens des von der Zielperson benutzten Fahrzeugs durchzuführen, sofern dieses Kennzeichen bekannt ist. Häufig ist jedoch der Einfalls- und Blickwinkel der Drohne nicht geeignet, um das Kraftfahrzeugkennzeichen zuverlässig erfassen und erkennen zu können.

Die Druckschrift US 2003/0201394 A1 beschreibt eine Vorrichtung zur Inspektion von Frachtcontainern, welche auf einem Kran montiert ist. Hierbei werden die Frachtcontainer mittels Detektoren auf verbotenes nukleares oder chemisches Material überprüft und gegebenenfalls für eine genauere Inspektion markiert, wenn ein derartiges Material nachgewiesen wird.

Die Druckschrift EP 1 376 160 A2 beschreibt einen Teiltransmissionsreflektor und ein optisches Sicherheitssensorsystem.

Die Druckschriften US 2011/0017097 A1 und US 4,916,014 A beschreiben Lacke, welche infrarotes Licht reflektieren.

### DARSTELLUNG DER ERFINDUNG

Es ist daher die Aufgabe der vorliegenden Erfindung, ein gattungsgemäßes Verfahren und eine Vorrichtung anzugeben, die es ermöglichen, bewegte Zielobjekte orten und verfolgen und gegebenenfalls auch bekämpfen zu können.

Die das Verfahren betreffende Aufgabe wird gelöst durch das im Patentanspruch 1 angegebene Verfahren.

Dieses erfindungsgemäße Verfahren zur Verfolgung eines bewegten Zielobjekts, insbesondere eines Fahrzeugs, weist die folgenden Schritte auf:
a) Identifizieren des Zielobjekts;
b) Markieren des Zielobjekts mit einer im sichtbaren Spektrum unsichtbaren, aber in einem ausgewählten Wellenlängenbereich des unsichtbaren Spektrums des Lichts retro-reflektierenden Markierung;
c) Verfolgen des markierten, bewegten Zielobjekts mit einer auf einer bewegten Plattform vorgesehenen Bilderfassungseinrichtung, die in dem ausgewählten Wellenlängenbereich des unsichtbaren Spektrums empfindlich ist, **dadurch gekennzeichnet,** dass die bewegte Plattform zur Verfolgung des markierten Zielobjekts mit einer Positionsbestimmungseinrichtung versehen ist und dass aus der von dieser ermittelten eigenen Position und dem Blickwinkel zum markierten Zielobjekt sowie einer geschätzten oder gemessenen Entfernung zum Zielobjekt eine Bestimmung der Positionsdaten des markierten Zielobjekts durchgeführt wird.

### VORTEILE

Das Markieren des Zielobjekts, nachdem es identifiziert worden ist, mit einer im sichtbaren Spektrum unsichtbaren, aber in einem ausgewählten Wellenlängenbereich des unsichtbaren Spektrums des Lichts retro-reflektierenden Markierung ermöglicht es, das bewegte Zielobjekt so zu markieren, dass die Markierung mit bloßem Auge nicht zu erkennen ist, also beispielsweise dünn und transparent ist, zumindest jedoch nicht als Markierung wahrgenommen wird. Die im bewegten Zielobjekt, beispielsweise im Fahrzeug, fahrende Zielperson nimmt somit den Vorgang des Markierens nicht wahr oder ist sich nicht bewusst, in einem markierten Fahrzeug zu sitzen, und erkennt daher nicht die potentielle Bedrohung, die mit dem Markieren des bewegten Zielobjekts einhergeht. Das markierte, bewegte Zielobjekt wird dann mit einer auf einer bewegten Plattform vorgesehenen Bilderfassungseinrichtung, die in dem ausgewählten Wellenlängenbereich des unsichtbaren Spektrums empfindlich ist, verfolgt. Diese Verfolgung kann aus der Distanz, beispielsweise luftgestützt, durchgeführt werden, so dass die Zielperson diese Verfolgung nicht wahrnimmt.

Vorzugsweise liegt der ausgewählte Wellenlängenbereich im Infrarotspektrum. Dadurch können natürliche Beleuchtungsquellen, wie beispielsweise die Sonne oder der Mond, benutzt werden, so dass die auf der bewegten Plattform vorgesehene Bilderfassungseinrichtung rein passiv arbeitet und sich nicht durch das Aussenden einer eigenen Beleuchtung enttarnt.

Vorzugsweise ist die Markierung von einer unsichtbaren, zum Beispiel im sichtbaren Spektrum transparenten, aber im ausgewählten nicht sichtbaren Wellenlängenbereich retro-reflektierenden Markierungsfarbe gebildet, die einen Lack und darin eingebettete retro-reflektierende Partikel aufweist, wobei die Partikel im ausgewählten Wellenlängenbereich des unsichtbaren Spektrums des Lichts einen für eine Retroreflexion ausreichenden Brechungsindex aufweisen, und wobei der Lack die darin eingebetteten Partikel im sichtbaren Spektrum des Lichts lichtdurchlässig sind. Eine derartige Markierungsfarbe lässt sich schnell und unkompliziert aufbringen und ist im getrockneten Zustand nicht zu erkennen. Diese Markierungsfarbe ist bevorzugt dünnflüssig und schnelltrocknend, so dass sie sich in kurzer Zeit über eine große Fläche verteilen kann und so schnell eine klarlackartige transparente dünne Schicht bildet, die schnell getrocknet ist. Diese Markierung ist danach kaum noch oder nicht mehr mit bloßem Auge wahrnehmbar, ist also zumindest bei oberflächlicher Betrachtung unsichtbar.

Vorteilhafterweise weisen die retro-reflektierenden Partikel im sichtbaren Spektrum des Lichts denselben Brechungsindex auf wie der Lack, so dass die Markierungsfarbe in diesem Spektrum transparent ist.

Die Markierungsfarbe ist zudem bevorzugt schwer oder nicht wasserlöslich und stark auf dem Untergrund haftend und somit nicht ohne größeren Aufwand zu entfernen. Sie wird dadurch bei Regen nicht einfach abgewaschen.

Dabei ist es besonders von Vorteil, wenn die Markierungsfarbe aus der Distanz auf das Zielobjekt aufgebracht wird. Dies erfolgt vorzugsweise mittels einer Paintball-Verschusseinrichtung. Diese erfindungsgemäße Markierung des zu bekämpfenden bewegten Zielobjekts kann somit durch eigene getarnte Einsatzkräfte erfolgen, die mittels eines aus der Nähe unbemerkt abgeschossenen Paintballs erfolgt, der mit der nur im infraroten Spektrum sichtbaren Retro-Reflexionsfarbe gefüllt ist und beim Aufprall auf das zu markierende Zielobjekt zerplatzt. Selbst wenn die Zielperson den Aufprall des Paintballs wahrnimmt, was zum Beispiel bei einem laufenden Fahrzeugmotor unwahrscheinlich ist, wird sie diesen Aufprall nicht als Vorstufe einer potentiellen Bedrohung einstufen, da unmittelbar nach dem Aufprall des Paintballs nichts weiter geschieht.

Besonders vorteilhaft ist es, wenn die bewegte Plattform zur Verfolgung des markierten Zielobjekts ein Luftfahrzeug, vorzugsweise eine Drohne, die insbesondere als Helikopter oder als Tragflächenluftfahrzeug ausgebildet ist. Diese Beobachtung und Verfolgung des Zielobjekts aus der Luft kann aus einer größeren Distanz erfolgen, so dass die Zielperson im Zielobjekt nicht unmittelbar wahrnimmt, dass sie verfolgt wird. Insbesondere dann, wenn das die Plattform bildende Luftfahrzeug ein Miniatur-Luftfahrzeug von der Größe eines Modellflugzeugs ist, sinkt die Wahrscheinlichkeit, dass die Zielperson die Verfolgung bemerkt, deutlich.

Vorteilhaft ist dabei, wenn die zur Bestimmung der Positionsdaten des markierten Zielobjekts erforderlichen Daten der aktuellen Position der Plattform und des Blickwinkels zum Zielobjekt oder die bereits an Bord der Plattform bestimmten Positionsdaten des markierten Zielobjekts über eine vorzugsweise drahtlose Datenübertragungsverbindung an eine Leitstation oder an eine Bekämpfungseinrichtung für das markierte Zielobjekt übertragen werden. Diese Variante des erfindungsgemäßen Verfahrens erlaubt es, eine äußerst kleine Plattform zur Verfolgung des markierten Zielobjekts einzusetzen, beispielsweise ein Miniatur-Luftfahrzeug von der bereits erwähnten Größe eines Modellflugzeugs. Die Bekämpfungseinrichtung für das markierte Zielobjekt kann auf diese Weise mit den für die Ortung des zu bekämpfenden bewegten Zielobjekts erforderlichen Daten versorgt werden und die Bekämpfung kann dann beispielsweise an einem Ort erfolgen, an dem die zu erwartenden Kollateralschäden minimiert sind.

Alternativ kann die bewegte Plattform selbst mit einer Bekämpfungseinrichtung für das markierte Zielobjekt versehen sein, so dass eine Bekämpfung des feindlichen Zielobjekts verzögerungsfrei durchgeführt werden kann.

Besonders vorteilhaft ist es, wenn bei dem erfindungsgemäßen Verfahren die Plattform mit der Bilderfassungseinrichtung zwischen einer natürlichen Beleuchtungsquelle, zum Beispiel der Sonne oder dem Mond, und dem markierten Zielobjekt positioniert wird. Dabei trifft das von der retro-reflektierenden Markierung reflektierte Sonnenlicht beziehungsweise Mondlicht auf die Bilderfassungseinrichtung der Plattform. Diese Ausnutzung des natürlichen Sonnen- oder Mondlichts zur Beleuchtung des Zielobjekts ermöglicht es, die Bilderfassungseinrichtung der Plattform rein passiv auszugestalten, so dass sie keinen eigenen Beleuchtungsstrahl aussenden muss, an welchem sie selbst entdeckt werden könnte.

Die Erfindung ist weiterhin auf eine Vorrichtung zur Verfolgung eines bewegten Zielobjekts gerichtet, die zur Durchführung des erfindungsgemäßen Verfahrens ausgestaltet ist. Die Vorrichtung ist dazu mit einer auf einer bewegten Plattform vorgesehenen Bilderfassungseinrichtung ausgestattet, welche in einem Wellenlängenbereich des unsichtbaren Spektrums empfindlich ist und für das von der Markierung retro-reflektierte Spektrum des Lichts sensibilisiert ist.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Szenario des Aufbringens der Markierung auf ein bewegtes Zielobjekt gemäß Schritt b) der vorliegenden Erfindung und
- Fig. 2: die Verfolgung eines markierten Zielobjekts entsprechend Schritt c) des erfindungsgemäßen Verfahrens.

### DARSTELLUNG VON BEVORZUGTEN AUSFÜHRUNGSBEISPIELEN

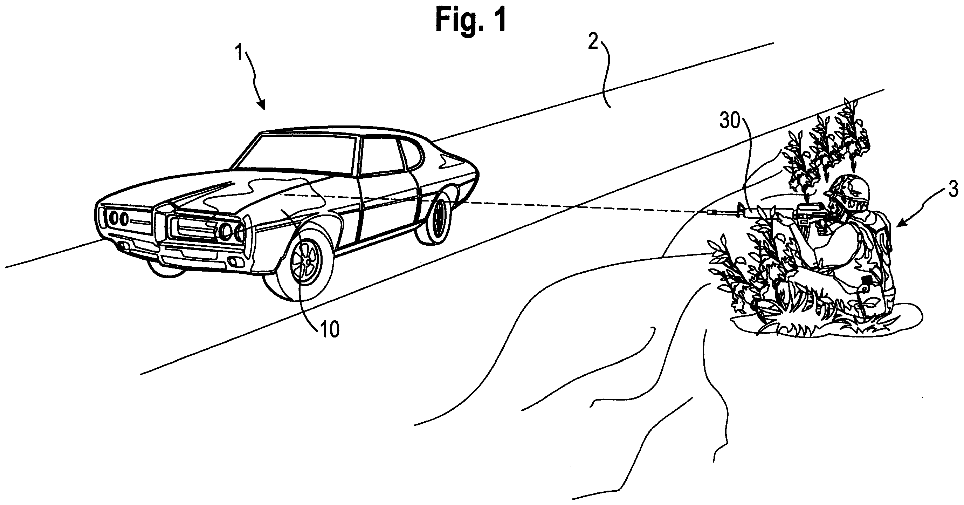

In Fig. 1 ist schematisch ein Szenario der Markierung eines bewegten Zielobjekts gezeigt. Das bewegte Zielobjekt wird hier von einem Kraftfahrzeug 1 gebildet, welches auf einer Straße 2 entlang fährt. Das Zielobjekt wird zunächst identifiziert, um festzustellen, ob die zu verfolgende Zielperson in dem Kraftfahrzeug mitfährt. Diese Identifikation des Zielobjekts wird von nicht im Bild dargestellten Einsatzkräften durchgeführt und bei erfolgter Identifizierung wird eine Zielansprache des Zielobjekts 1 an einen im Verborgenen operierenden, getarnten Schützen 3 weitergegeben.

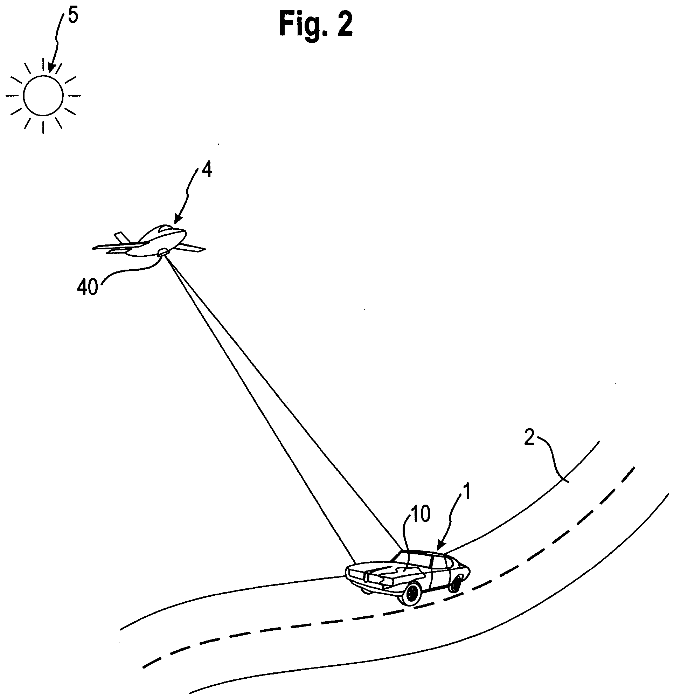

Der Schütze 3 ist mit einer Verschusseinrichtung 30 für Paintballs, also für Farbbälle, ausgerüstet. Diese Farbbälle bestehen beispielsweise aus einer Gelatine-Ummantelung, die einen Farbvorrat umhüllt. Die beim erfindungsgemäßen Verfahren, wie es in den Figuren 1 und 2 dargestellt ist, verwendete Markierungsfarbe ist eine unsichtbare Farbe, die im infraroten Wellenlängenbereich retro-reflektierende Eigenschaften aufweist.

Die Markierungsfarbe weist retro-reflektierende Partikel auf, die in ein Lackmaterial eingebettet und von diesem umhüllt sind. Das Lackmaterial und das Material der retro-reflektierenden Partikel sowie deren äußere Gestalt sind derart aufeinander abgestimmt, dass die Markierungsfarbe im sichtbaren Spektrum des Lichts transparent ist, also lichtdurchlässig ist und keine Farben des sichtbaren Spektrums absorbiert. Diese vollständige Transmission im sichtbaren Spektrum hat zur Folge, dass die Markierungsfarbe keinen Teil des sichtbaren Spektrums des Lichts reflektiert. In einem ausgewählten Wellenlängenbereich des unsichtbaren Lichts, beispielsweise im Infrarotbereich, weisen die Partikel hingegen eine retro-reflektierende Eigenschaft auf. Dazu sind die Brechungsindizes des Lacks und des Materials der Partikel im ausgewählten Wellenlängenbereich des unsichtbaren Lichts unterschiedlich, so dass es am Übergang, also an der Grenzschicht, zwischen dem Partikelmaterial und dem Lack zu Reflexionen und damit zur gewünschten retro-reflektierenden Wirkung kommt. Im Gegensatz dazu sind die Brechungsindizes des Lacks und des Materials der Partikel im sichtbaren Bereich des Lichts gleich, so dass es hier an der Grenze zwischen Partikelmaterial und Lack zu keiner Reflexion kommt.

Der Schütze 3 beschießt das als Zielobjekt identifizierte Fahrzeug 1 möglichst im Bereich einer nach oben weisenden Fläche, wie beispielsweise der Motorhaube, dem Dach oder dem Kofferraumdeckel, mit einem oder mehreren Paintballs mit dieser Markierungsfarbe, um so die unsichtbare, im IR-Wellenlängenbereich retro-reflektierende Farbe als Markierung 10 auf die Karosserie des Fahrzeugs 1 aufzubringen.

Die Fahrzeuginsassen bemerken das Aufschlagen des Paintballs auf die Karosserie aufgrund der Umgebungsgeräusche möglicherweise gar nicht oder sie stufen dies zumindest nicht als eine Gefahrensituation oder als Vorstufe zu einer Gefahrensituation ein.

Im weiteren Verlauf der Durchführung des erfindungsgemäßen Verfahrens wird das mit der retro-reflektierenden Markierung 10 versehene Fahrzeug 1 von einer Bilderfassungseinrichtung 40 an Bord einer bewegten Plattform, im gezeigten Beispiel einer Aufklärungsdrohne 4, erfasst und anhand der Markierung 10 identifiziert. Die Aufklärungsdrohne 4 befindet sich dabei in einer Position zwischen dem Fahrzeug 1 und der Sonne 5 im Wesentlichen auf oder geringfügig neben der Geraden, die das auf das Fahrzeug 1 einfallende Sonnenlicht beschreibt. So kann die Bilderfassungseinrichtung 40 das von der Markierung 10 retro-reflektierte Sonnenlicht einfangen.

Anhand der von einer herkömmlichen Positionsbestimmungsvorrichtung der Drohne 4 ermittelten Positionsdaten der Drohne 4 kann ein an Bord der Drohne 4 vorgesehener Bordcomputer mit dem ebenfalls bekannten Blickrichtungsvektor der Bilderfassungseinrichtung 40 zum Zielobjekt sowie einer geschätzten oder gemessenen Entfernung zum Zielobjekt die Positionsdaten des das Zielobjekt bildenden Fahrzeugs 1 ermitteln und über eine Datenlinkverbindung an eine (nicht gezeigte) Bekämpfungsstation, beispielsweise eine andere Drohne oder Bodentruppen, weitergeben. Alternativ kann auch die Drohne 4 mit einer entsprechenden Bekämpfungseinrichtung, beispielsweise mit Raketen, ausgestattet sein, um das identifizierte Zielobjekt unmittelbar zu bekämpfen.

Obwohl im gezeigten und vorstehend beschriebenen Beispiel die Aufbringung der unsichtbaren, aber im IR-Bereich retro-reflektierenden Markierung 10 mittels einer Paintball-Verschusseinrichtung dargestellt wurde, kann die Markierung 10 auch auf andere Weise auf das Zielobjekt aufgebracht werden. So kann beispielsweise aus einem getarnten unbemannten Luftfahrzeug heraus ein Farbbeutel auf das Zielobjekt abgeworfen werden. Das Zielobjekt kann aber auch in einem unbeobachteten Augenblick von Spezialkräften mittels einer Sprühfarbe markiert werden, die die unsichtbare retro-reflektierende Eigenschaft besitzt.

Die retro-reflektierende Eigenschaft der unsichtbaren Markierung 10 ist nicht auf den Infrarot-Wellenlängenbereich beschränkt; die Markierung 10 kann auch in einem anderen unsichtbaren Wellenlängenbereich, wie beispielsweise dem Wellenlängenbereich des ultravioletten Lichts, retro-reflektierend sein. Entsprechend sind dann auch die Wellenlängeneigenschaften der Bilderfassungseinrichtung 40 an diesen Wellenlängenbereich angepasst. Weiterhin kann die im Beispiel von der Drohne 4 gebildete Plattform auch mit einer aktiven Beleuchtung (nicht gezeigt) versehen sein, die Licht in einem nichtsichtbaren Wellenlängenbereich ausstrahlt, das von der retro-reflektierenden Markierung 10 zurückgeworfen wird. In diesem Fall ist es nicht erforderlich, die im Beispiel als Drohne 4 ausgebildete Plattform zwischen einer natürlichen Lichtquelle, wie zum Beispiel der Sonne 5, und dem im Beispiel vom Kraftfahrzeug 1 gebildeten Zielobjekt zu platzieren. Allerdings hat die im Beispiel beschriebene Nutzung des natürlichen Lichts der Sonne 5 den Vorteil, dass sich die von der Drohne 4 gebildete Plattform gegenüber der Zielperson im Zielobjekt nicht durch das Ausstrahlen einer eigenen (sichtbaren oder unsichtbaren) Beleuchtung verrät.

Ein Bestandteil der im beschriebenen Ausführungsbeispiel als Markierung 10 dienenden unsichtbaren retro-reflektierenden Farbe kann beispielsweise Perylen (ein organisches Molekül aus vier Benzolringen) sein.

### Bezugszeichenliste

Es bezeichnen:
- 1: Fahrzeug
- 2: Straße
- 3: Schütze
- 4: Drohne
- 5: Sonne
- 10: retro-reflektierende Markierung
- 30: Verschusseinrichtung
- 40: Bilderfassungseinrichtung

## Patentansprüche

1. Verfahren zur Verfolgung eines bewegten Zielobjekts, insbesondere eines Fahrzeugs (1), mit den Schritten
a) Identifizieren des Zielobjekts;
b) Markieren des Zielobjekts mit einer im sichtbaren Spektrum unsichtbaren, aber in einem ausgewählten Wellenlängenbereich des unsichtbaren Spektrums des Lichts retro-reflektierenden Markierung (10);
c) Verfolgen des markierten, bewegten Zielobjekts mit einer auf einer bewegten Plattform vorgesehenen Bilderfassungseinrichtung (40), die in dem ausgewählten Wellenlängenbereich des unsichtbaren Spektrums empfindlich ist, **dadurch gekennzeichnet, dass** die bewegte Plattform zur Verfolgung des markierten Zielobjekts mit einer Positionsbestimmungseinrichtung versehen ist und dass aus der von dieser ermittelten eigenen Position und dem Blickwinkel zum markierten Zielobjekt sowie einer geschätzten oder gemessenen Entfernung zum Zielobjekt eine Bestimmung der Positionsdaten des markierten Zielobjekts durchgeführt wird.

2. Verfahren nach Anspruch 1,
**dadurch gekennzeichnet,**
**dass** der ausgewählte Wellenlängenbereich im Infrarotspektrum liegt.

3. Verfahren nach Anspruch 1 oder 2,
**dadurch gekennzeichnet,**
- **dass** die Markierung (10) von einer unsichtbaren, aber im ausgewählten Wellenlängenbereich retro-reflektierenden Markierungsfarbe gebildet ist, die einen Lack und darin eingebettete retro-reflektierende Partikel aufweist, wobei die Partikel im ausgewählten Wellenlängenbereich des unsichtbaren Spektrums des Lichts einen für eine Retroreflexion ausreichenden Brechungsindex aufweisen, und
- **dass** der Lack die darin eingebetteten Partikel im sichtbaren Spektrum des Lichts lichtdurchlässig sind.

4. Verfahren nach Anspruch 3,
**dadurch gekennzeichnet,**
**dass** die retro-reflektierenden Partikel im sichtbaren Spektrum des Lichts denselben Brechungsindex aufweisen wie der Lack, so dass die Markierungsfarbe in diesem Spektrum transparent ist.

5. Verfahren nach Anspruch 4,
**dadurch gekennzeichnet,**
**dass** die Markierungsfarbe aus der Distanz auf das Zielobjekt aufgebracht wird, wobei die Aufbringung der Markierungsfarbe vorzugsweise mittels einer Paintball-Verschusseinrichtung (30) erfolgt.

6. Verfahren nach einem der vorhergehenden Ansprüche,
**dadurch gekennzeichnet,**
**dass** die bewegte Plattform zur Verfolgung des markierten Zielobjekts ein Luftfahrzeug, insbesondere ein Helikopter oder ein Tragflächenluftfahrzeug, ist.

7. Verfahren nach Anspruch 1,
**dadurch gekennzeichnet,**
**dass** die zur Bestimmung der Positionsdaten des markierten Zielobjekts erforderlichen Daten der aktuellen Position der Plattform und des Blickwinkels zum Zielobjekt oder die bereits an Bord der Plattform bestimmten Positionsdaten des markierten Zielobjekts über eine vorzugsweise drahtlose Datenübertragungsverbindung an eine Leitstation oder an eine Bekämpfungseinrichtung für das markierte Zielobjekt übertragen werden.

8. Verfahren nach einem der vorhergehenden Ansprüche,
**dadurch gekennzeichnet,**
**dass** die bewegte Plattform mit einer Bekämpfungseinrichtung für das markierte Zielobjekt versehen ist.

9. Verfahren nach einem der vorhergehenden Ansprüche,
**dadurch gekennzeichnet,**
**dass** die Plattform mit der Bilderfassungseinrichtung zwischen einer natürlichen Beleuchtungsquelle, zum Beispiel der Sonne oder dem Mond, und dem markierten Zielobjekt positioniert wird.

10. Vorrichtung zur Verfolgung eines bewegten Zielobjekts, ausgestaltet zur Durchführung des Verfahrens nach einem der vorhergehenden Ansprüche.

## Claims

1. Method for tracking a moving target object, in particular a vehicle (1), having the steps of
a) identifying the target object;
b) marking the target object with a mark (10) which is invisible in the visible spectrum but retroreflective in a selected wavelength range of the non-visible spectrum of light;
c) tracking the marked, moving target object using an image capturing device (40), which is provided on a moving platform and is sensitive in the selected wavelength range of the non-visible spectrum, **characterized in that** the moving platform for tracking the marked target object is provided with a position determination device and **in that**, based on its own position ascertained by the latter and the viewing angle towards the marked target object and on an estimated or measured distance from the target object, a determination of the position data of the marked target object is performed.

2. Method according to Claim 1, **characterized in that** the selected wavelength range lies in the infrared spectrum.

3. Method according to Claim 1 or 2, **characterized**
- **in that** the mark (10) is formed by a marking paint, which is invisible but retroreflective in the selected wavelength range and has a lacquer and retroreflective particles embedded therein, wherein the particles in the selected wavelength range of the non-visible spectrum of light have a refractive index that is sufficient for retroreflection, and
- **in that** the lacquer and the particles embedded therein are light-transmissive in the visible spectrum of light.

4. Method according to Claim 3, **characterized in that** the retroreflective particles have, in the visible spectrum of light, the same refractive index as the lacquer, with the result that the marking paint is transparent in this spectrum.

5. Method according to Claim 4, **characterized in that** the marking paint is applied to the target object from a distance, wherein the marking paint is preferably applied using a paintball shooting device (30).

6. Method according to one of the preceding claims, **characterized in that** the moving platform for tracking the marked target object is an aircraft, in particular a helicopter or a winged aircraft.

7. Method according to Claim 1, **characterized in that** the data that relate to the current position of the platform and the viewing angle towards the target object and that are necessary for determining the position data of the marked target object, or the position data of the marked target object which have already been determined on board of the platform, are transmitted to a control station or to a combat device for the marked target object via a preferably wireless data transmission link.

8. Method according to one of the preceding claims, **characterized in that** the moving platform is provided with a combat device for the marked target object.

9. Method according to one of the preceding claims, **characterized in that** the platform having the image capturing device is positioned between a natural illumination source, such as the sun or the moon, and the marked target object.

10. Apparatus for tracking a moving target object, designed for performing the method according to one of the preceding claims.

## Revendications

1. Procédé de poursuite d'un objet cible en mouvement, en particulier d'un véhicule (1), comprenant les étapes consistant à
a) identifier l'objet cible ;
b) marquer l'objet cible avec un marquage (10) qui est invisible dans le spectre visible mais rétroréfléchissant dans une gamme de longueurs d'onde sélectionnée du spectre invisible de la lumière ;
c) poursuivre l'objet cible en mouvement marqué au moyen d'un dispositif de capture d'image (40) prévu sur une plate-forme en mouvement, qui est sensible dans la plage de longueurs d'onde sélectionnée du spectre invisible, **caractérisé en ce que** la plate-forme en mouvement est munie d'un dispositif de détermination de position permettant de poursuivre l'objet cible marqué, et **en ce qu'**une détermination des données de position de l'objet cible marqué est effectuée à partir de la position propre déterminée par ledit dispositif et de l'angle de vue de l'objet cible marqué ainsi que d'une distance estimée ou mesurée de l'objet cible.

2. Procédé selon la revendication 1,
**caractérisé en ce que** la plage de longueurs d'onde sélectionnée se situe dans le spectre infrarouge.

3. Procédé selon la revendication 1 ou 2,
**caractérisé**
- **en ce que** le marquage (10) est formé par une encre de marquage invisible mais qui est rétroréfléchissante dans la plage de longueurs d'onde sélectionnée, qui comporte une laque et des particules rétroréfléchissantes incorporées dans celle-ci, dans lequel les particules présentent un indice de réfraction suffisant pour une rétroréflexion dans la plage de longueurs d'onde sélectionnée du spectre invisible de la lumière, et
- **en ce que** la laque et les particules incorporées dans celle-ci sont translucides dans le spectre visible de la lumière.

4. Procédé selon la revendication 3,
**caractérisé en ce que** les particules rétroréfléchissantes présentent le même indice de réfraction que la laque dans le spectre visible de la lumière, de sorte que l'encre de marquage est transparente dans ce spectre.

5. Procédé selon la revendication 4,
**caractérisé en ce que** la peinture de marquage est appliquée à distance sur l'objet cible, dans lequel l'application de la peinture de marquage est de préférence réalisée au moyen d'un dispositif de tir de paintball (30).

6. Procédé selon l'une des revendications précédentes,
**caractérisé en ce que** la plate-forme en mouvement permettant de poursuivre l'objet cible marqué est un aéronef, en particulier un hélicoptère ou un aéronef à surface portante.

7. Procédé selon la revendication 1,
**caractérisé en ce que** les données nécessaires à la détermination des données de position de l'objet cible marqué relatives à la position actuelle de la plate-forme et à l'angle de vue par rapport à l'objet cible ou les données de position de l'objet cible marqué déjà déterminées à bord de la plate-forme sont transmises par l'intermédiaire d'une liaison de transmission de données, de préférence sans fil, vers un poste de commande ou un dispositif de combat destiné à l'objet cible marqué.

8. Procédé selon l'une des revendications précédentes,
**caractérisé en ce que** la plate-forme en mouvement est munie d'un dispositif de combat destiné à l'objet cible marqué.

9. Procédé selon l'une des revendications précédentes,
**caractérisé en ce que** la plate-forme munie du dispositif de capture d'image est positionnée entre une source d'éclairage naturelle, par exemple le soleil ou la lune, et l'objet cible marqué.

10. Dispositif de poursuite d'une cible en mouvement, conçu pour mettre en oeuvre le procédé selon l'une des revendications précédentes.
